# EUROPÄISCHE PATENTSCHRIFT

(11) **EP 1 474 361 B1**
(45) Veröffentlichungstag und Bekanntmachung des Hinweises auf die Patenterteilung: **02.08.2006**
(21) Anmeldenummer: 03704218.1
(22) Anmeldetag: 17.01.2003
(51) Int. Cl.: C01B 33/033, C01B 33/107

(54) **VERFAHREN ZUR HERSTELLUNG VON ORGANOHALOGENSILANEN AUS AMORPHEM SILIZIUM**
METHOD FOR PRODUCING ORGANOHALOSILANES FROM AMORPHOUS SILICON
PROCEDE DE PRODUCTION D'ORGANOHALOGENOSILANES DE SILICIUM AMORPHE

(30) Priorität: 18.01.2002 DE 10201772; 17.04.2002 DE 10217125; 17.04.2002 DE 10217140; 17.04.2002 DE 10217124; 17.04.2002 DE 10217126
(43) Veröffentlichungstag der Anmeldung: 10.11.2004
(60) Teilanmeldung: 06012147.2
(73) Patentinhaber: Wacker Chemie AG, 81737 München (DE)
(72) Erfinder: AUNER, Norbert Prof.Dr., 61479 Glashütten / Taunus (DE)
(74) Vertreter: Hauck, Graalfs, Wehnert, Döring, Siemons
(86) Internationale Anmeldenummer: PCT/DE2003/000116
(87) Internationale Veröffentlichungsnummer: WO 2003/059815

(56) Entgegenhaltungen:
- WO-A-01/14250
- WO-A-83/02443
- US-A- 4 446 120
- US-A- 4 756 896

## Beschreibung

Die vorliegende Erfindung betrifft ein Verfahren zur Herstellung von Organohalogensilanen aus amorphem silicium.

Der Erfindung liegt die Aufgabe zugrunde, ein Verfahren der angegebenen Art zu schaffen, das sich mit einem besonders geringen Aufwand an Materialien und/oder Energie durchführen läßt und/oder sich durch eine besonders hohe Vielseitigkeit auszeichnet.

Amorphes Silicium kann durch Reduktion eines Halosilanes mit einem Metall in einem Lösungsmittel erhalten werden.

Ein derartiges Verfahren ist bekannt. So wird beispielsweise in der WO 0114250 ein Verfahren zur Herstellung von Siliciumnanopartikeln beschrieben, bei dem in einem ersten Schritt ein Halosilan mit einem Metall in einem Lösungsmittel reduziert wird, um ein erstes Reaktionsgemisch zu bilden, das ein Metallhalogenid, amorphes Silicium und halogenierte Siliciumnanopartikel enthält. Da das amorphe Silicium bei diesem Verfahren als Nebenprodukt anfällt, werden Einzelheiten hiervon nicht beschrieben. Vielmehr geht es in drei weiteren Verfahrensschritten um die Aufarbeitung dieses ersten Reaktionsgemisches zur Gewinnung der Siliciumnanopartikel.

Als Lösungsmittel werden verschiedene Arten von Glycolethern vorgeschlagen, möglicherweise im Gemisch mit einem apolaren Lösungsmittel.

Als amorph werden Festkörper bezeichnet, deren molekulare Bausteine nicht in Kristallgittern, sondern regellos angeordnet sind. Amorphes Silicium (a-Si) läßt sich wesentlich kostengünstiger herstellen als kristallines Silicium und stellt daher ein Material dar, nach dem ein großer Bedarf besteht.

Vorzugsweise wird dabei als Lösungsmittel ein apolares Lösungsmittel eingesetzt.

Mit diesem Verfahren läßt sich amorphes Silicium gewinnen, das im Vergleich zu auf herkömmliche Weise hergestelltem amorphen Silicium eine gesteigerte Reaktivität aufweist.

Mit dem hier verwendeten Begriff "Lösungsmittel" ist ein Mittel gemeint, das in der Lage ist, eine Dispersion des Metalles im "Lösungsmittel" herzustellen, d.h. dieser Begriff soll auch bloße Dispersionsmittel umfassen. Ein "apolares oder unpolares" Lösungsmittel weist keine polare Gruppen oder funktionelle Gruppen auf, deren charakteristische Elektronenverteilungen dem Molekül ein beträchtliches elektrisches Dipolmoment erteilen, so daß solche Gruppen die Affinität zu anderen polaren chemischen Verbindungen bedingen.

Dabei wurde festgestellt, daß durch Einsatz eines apolaren Lösungsmittels im vorstehend angegebenen Reduktionsverfahren reines amorphes Silicium erhalten wird, das eine schwarze Farbe besitzt. Dieses amorphe Silicium ist nicht "oberflächenbelegt" und zeichnet sich durch ein besonders hohes Reaktionsvermögen aus. Dies steht im Gegensatz zu dem auf herkömmliche Weise gewonnenen amorphen Silicium, das als braunes Pulver anfällt und, wie Untersuchungen gezeigt haben, "oberflächenbelegt" ist, beispielsweise mit Cl, Silylchlorid oder O₂ oder HO belegt ist.

Bei den bisherigen Darstellungsverfahren hat man immer mit polaren Lösungsmitteln gearbeitet, die zwangsläufig zu einer Oberflächenbelegung des gewonnenen Siliciums geführt haben, das als "amorph" bezeichnet wurde, jedoch in Wirklichkeit aufgrund der vorhandenen Oberflächenbelegung kein reines amorphes Silicium ist. So wird auch bei dem Verfahren in der vorstehend genannten Veröffentlichung mit einem polaren Lösungsmittel (Glycolether) gearbeitet.

Vorzugsweise finden organische, nicht koordinierende Lösungsmittel, wie Xylol, Toluol, Verwendung.

Als Metall wird vorzugsweise ein Metall der Gruppe I oder II des Periodensystems verwendet. Natrium wird bevorzugt, wobei allerdings auch mit Magnesium gute Ergebnisse erzielt wurden.

Als Halosilan findet vorzugsweise ein Silan von Br, Cl, J oder F oder ein Organosilan von Br, Cl, J oder F Verwendung. Besonders bevorzugt wird als Halosilan ein Siliciumtetrahalogenid eingestetzt, wobei speziell Siliciumtetrachlorid (SiCl₄) oder Silicumtetrafluorid (SiF₄) Verwendung finden.

Das Metall wird vorzugsweise im Lösungsmittel aufgeschmolzen, um eine Dispersion des Metalles im Lösungsmittel herzustellen. Ein derartiges Aufschmelzen ist nicht unbedingt erforderlich, vielmehr können auch Metallstäube, Metallpulver etc. eingesetzt werden. Wesentlich ist, daß das Metall in einem Zustand mit aktivierter Oberfläche für die Reaktion zur Verfügung steht.

Wenn das Metall im Lösungsmittel aufgeschmolzen werden soll, findet vorzugsweise ein apolares Lösungsmittel Verwendung, dessen Siedepunkt höher ist als der Schmelzpunkt des verwendeten Metalles, und es wird mit einer Reaktionstemperatur über der Schmelztemperatur des Metalles (Natrium = 96 °C) und unter dem Siedepunkt des eingesetzten apolaren Lösungsmittels gearbeitet. Es kann auch bei erhöhten Drücken gearbeitet werden.

Zweckmäßigerweise wird das Verfahren unter Rückflußbedingungen für das Lösungsmittel durchgeführt.

Bei diesem Verfahren fällt das unbelegte amorphe Silicium im Gemisch mit einem Metallhalogenid an. Bereits dieses Gemisch besitzt in bezug auf das amorphe Silicum eine sehr hohe Reaktivität, so daß es für die gewünschten weiteren Reaktionen eingesetzt werden kann. Das amorphe Silicum kann aber auch über ein Trennverfahren aus dem Gemisch isoliert werden, wobei hierzu beliebige physikalische oder chemische Trennverfahren eingesetzt werden können. So können beispielsweise physikalische Trennverfahren, wie Aufschmelzen, Abpressen, Zentrifugieren, Sedimentationsverfahren, Flotationsverfahren etc., eingesetzt werden. Als chemisches Verfahren kann ein Auswaschen des amorphen Siliciums mit einem Lösungsmittelgemisch, welches das Metallhalogenid löst, aber nicht irreversibel mit dem Silicium reagiert, durchgeführt werden. Beispielsweise wird mit flüssigem Ammoniak ein mit Ammoniak belegtes Silicium gewonnen, wobei durch Abpumpen des Ammoniaks das gewünschte reine amorphe Silicium schwarzer Farbe dargestellt werden kann.

Aufgabe der vorliegenden Erfindung war es, ein kostengünstiger , neues Verfahren zur Herstellung von Organohalogensilanen zur Verfügung zustellen, welches sich durch hole Umsetz raten und gezielte Produktausbeuten d.h. Minimizung des Nebenproduckte auszeichnet.

Gegenstand der vorliegenden Erfindung ist daher ein Verfahren zur Herstellung von Organohalogensilanen, insbesondere Methylchlorsilanen, durch Reaktion von Silicium und Organohalogenen.

Von den Organohalogensilanen besitzen die Methylchlorsilane eine besonders große Bedeutung, da sie Ausgangsprodukte für die Herstellung von Siliconen bilden. Es handelt sich hierbei um eine Gruppe von chlor-haltigen silicium-organischen Verbindungen, wie beispielsweise Trichlormethylsilan H₃C-SiCl₃, Dichlordimethylsilan (H₃C)₂SiCl₂ und Chlortrimethylsilan (H₃C)₃SiCl. Die Methylchlorsilane sind farblose, stechend riechende, an der Luft infolge HCl-Abspaltung stark rauchende Flüssigkeiten, die mit Wasser hydrolisieren und anschließend Kondensationsprodukte bilden.

Methylchlorsilane werden unter Verwendung von Cu als Katalysator bei der Umsetzung von fein gemahlenem Si mit Methylchlorid bei ca. 300 °C in Fließbett-Reaktoren gebildet (Müller-Rochow-Synthese). Hierdurch wird ein Gemisch von Methylchlorsilanen erhalten, das durch fraktionierte Destillation in die einzelnen Bestandteile zerlegt wird. Im Prinzip gleichartig verläuft die Synthese der Chlorphenylsilane aus Si und Chlorbenzol in Gegenwart von Cu oder Ag.

Organohalogensilane lassen sich daher bei relativ moderaten Temperaturen (um 300 °C) nur mit Hilfe von Katalysatoren herstellen, bei denen es ich beispielsweise um Cu oder Ag handelt. Eine Herstellung ohne Katalysatoren ist nur bei Temperaturen über 1200 °C möglich.

Die Zuror geschilderte Aufgabe wird bei dieser Verfahrensvariante durch ein Verfahren zur Herstellung von Organohalogensilanen, insbesondere Methylchlorsilanen, durch Reaktion von Silicium und Organohalogenen dadurch gelöst, daß man amorphes Silicium mit dem Organohalogen umsetzt.

Das erfindungsgemäße Verfahren bietet den Vorteil, daß die Umsetzung des amorphen Siliciums mit dem Organohalogen bei niedrigeren Temperaturen als beim Stand der Technik abläuft. Ein weiterer Vorteil besteht darin, daß das Verfahren katalysatorfrei durchgeführt werden kann, und zwar bei Temperaturen, die unter den bisher bekannten Reaktionstemperaturen (etwa 1200 °C) liegen. Das Verfahren kann aber auch unter Verwendung eines Katalysators, beispielsweise von Cu oder Ag, durchgeführt werden, wobei die Umsetzung bei Temperaturen < 300 °C durchgeführt werden kann. Der Vorteil gegenüber der bekannten Müller-Rochow-Synthese besteht somit in der Einsparung von Katalysatormaterial und/oder der Einsparung von Energie.

Die vorstehend aufgeführten Vorteile des erfindungsgemäßen Verfahrens beruhen auf der Verwendung von amorphem Silicium.

Als amorph werden Festkörper bezeichnet, deren molekulare Bausteine nicht in Kristallgittern, sondern regellos angeordnet sind. Amorphes Silicium (a-Si) läßt sich wesentlich kostengünstiger herstellen als kristallines Silicium und stellt daher ein Material dar, nach dem ein großer Bedarf besteht. Das bisher auf herkömmliche Weise gewonnene amorphe Silicium ist, wie Untersuchungen gezeigt haben, mehr oder weniger verunreinigt, da es "oberflächenbelegt" ist, beispielsweise mit Cl, Silylchlorid oder O₂ oder HO belegt ist. Dieses Material fällt als braunes Pulver an. Es ist für das erfindungsgemäße Verfahren geeignet.

Im Gegensatz dazu wurde über ein neues Verfahren amorphes Silicium mit hoher Reinheit hergestellt, das eine schwarze Farbe besitzt. Dieses amorphe Silicium ist nicht "oberflächenbelegt" und zeichnet sich durch ein besonders hohes Reaktionsvermögen aus. Setzt man nunmehr dieses schwarze amorphe (unbelegte) Silicium mit dem Organohalogen um, lassen sich auf diese Weise Organohalogensilane bei besonders niedrigen Temperaturen und/oder katalysatorfrei herstellen, da sich das schwarze amorphe Silicium durch eine besonders hohe Reaktivität auszeichnet.

Das erfindungsgemäß eingesetzte schwarze amorphe (unbelegte) Silicium wird beispielsweise durch Reaktion eines Halosilanes (Halogensilanes) mit einem Metall in einem Lösungsmittel hergestellt, wobei als Lösungsmittel ein apolares (unpolares) Lösungsmittel eingesetzt wird. Mit dem hier verwendeten Begriff "Lösungsmittel" ist ein Mittel gemeint, das in der Lage ist, eine Dispersion des Metalles im "Lösungsmittel" herzustellen, d.h. dieser Begriff soll auch bloße Dispersionsmittel umfassen. Ein "apolares oder unpolares" Lösungsmittel weist keine polare Gruppen oder funktionelle Gruppen auf, deren charakteristische Elektronenverteilungen den Molekülen ein beträchtliches elektrisches Dipolmoment erteilen, so daß solche Gruppen die Affinität zu anderen polaren chemischen Verbindungen bedingen.

Durch den Einsatz eines apolaren Lösungsmittels im vorstehend angegebenen Reduktionsverfahren wird reines amorphes Silicium erhalten, das eine schwarze Farbe besitzt. Bei den bisherigen Darstellungsverfahren hat man immer mit polaren Lösungsmitteln gearbeitet, die zwangsläufig zu einer Oberflächenbelegung des gewonnenen Siliciums geführt haben, das als "amorph" bezeichnet wurde, jedoch in Wirklichkeit aufgrund der vorhandenen Oberflächenbelegung kein reines amorphes Silicium ist.

Vorzugsweise finden organische, nicht koordinierende Lösungsmittel, wie Xylol, Toluol, Verwendung.

Als Metall wird vorzugsweise ein Metall der Gruppe I oder II des Periodensystems verwendet. Natrium wird bevorzugt, wobei allerdings auch mit Magnesium gute Ergebnisse erzielt wurden.

Als Halosilan oder Halogensilan findet vorzugsweise ein Silan von Br, Cl, J oder F oder ein Organosilan von Br, Cl, J oder F Verwendung. Besonders bevorzugt wird als Halosilan ein Siliciumtetrahalogenid eingesetzt, wobei speziell Siliciumtetrachlorid (SiCl₄) oder Siliciumtetrafluorid (SiF₄) Verwendung finden.

Das Metall wird vorzugsweise im Lösungsmittel aufgeschmolzen, um eine Dispersion des Metalles im Lösungsmittel herzustellen. Ein derartiges Aufschmelzen ist nicht unbedingt erforderlich, vielmehr können auch Metallstäube, Metallpulver etc. eingesetzt werden. Wesentlich ist, daß das Metall in einem Zustand mit aktiver Oberfläche für die Reaktion zur Verfügung steht.

Wenn das Metall im Lösungsmittel aufgeschmolzen werden soll, findet vorzugsweise ein apolares Lösungsmittel Verwendung, dessen Siedepunkt höher ist als der Schmelzpunkt des verwendeten Metalles, und es wird mit einer Reaktionstemperatur über der Schmelztemperatur des Metalles (Natrium = 96 °C) und unter dem Siedepunkt des eingesetzten apolaren Lösungsmittel gearbeitet. Es kann auch bei erhöhten Drücken gearbeitet werden.

Zweckmäßigerweise wird das Verfahren unter Rückflußbedingungen für das Lösungsmittel durchgeführt.

Bei dem vorstehend beschriebenen Verfahren zur Herstellung des schwarzen amorphen Siliciums fällt das unbelegte amorphe Silicium im Gemisch mit einem Metallhalogenid an. Bereits dieses Gemisch besitzt in bezug auf das amorphe Silicium eine sehr hohe Reaktivität, so daß es für die Umsetzung mit dem Organohalogen eingesetzt werden kann. Das amorphe Silicium kann aber auch über ein Trennverfahren aus dem Gemisch isoliert werden, wobei hierzu beliebige physikalische oder chemische Trennverfahren eingesetzt werden können. So können beispielsweise physikalische Trennverfahren, wie Aufschmelzen, Abpressen, Zentrifugieren, Sedimentationsverfahren, Flotationsverfahren etc., eingesetzt werden. Als chemisches Verfahren kann ein Auswaschen des amorphes Siliciums mit einem Lösungsmittel oder Lösungsmittelgemisch, welches das Metallhalogenid löst, aber nicht irreversibel mit dem Silicium reagiert, durchgeführt werden. Beispielsweise wird mit flüssigem Ammoniak ein mit Ammoniak belegtes Silicium gewonnen, wobei durch Abpumpen des Ammoniaks das gewünschte reine amorphe Silicium schwarzer Farbe dargestellt werden kann.

Bei dem erfindungsgemäßen Verfahren zur Herstellung von Organohalogensilanen kann man analog zur Müller-Rochow-Synthese das schwarze amorphe Silicium als feines, insbesondere staubfeines,Siliciumpulver einsetzen und die Umsetzung im Fließbett durchführen.

Wie bereits erwähnt, läuft das erfindungsgemäße Verfahren bei erhöhten Temperaturen ab, die jedoch aufgrund der hohen Reaktivität des amorphen Siliciums geringer sind als beim Stand der Technik. Diese erhöhten Temperaturen können in üblicher Weise durch Erhitzen erzielt werden. Eine weitere Ausführungsform des erfindungsgemäßen Verfahrens sieht jedoch vor, daß man die Umsetzung des amorphen Siliciums mit dem Organohalogen mit Mikrowellenenergie bewirkt. Dabei kann die Umsetzung mit oder ohne Katalysator durchgeführt werden.

Bei einer besonders bevorzugten Variante setzt man das amorphe Silicium in Verbindung mit einer mikrowellenenergieabsorbierenden und thermische Energie auf Silicium übertragenden Substanz ein. Diese Substanz kann gleichzeitig als Katalysator/Promotor wirken. Eine solche Substanz ist beispielsweise Kupfer.

Damit die Umsetzung kontinuierlich abläuft, wird vorzugsweise nicht-gepulste Mikrowellenenergie eingesetzt. Zur Erzeugung der gewünschten Mikrowellenenergie kann auf bekannte Mikrowellenöfen zurückgegriffen werden.

Amorphes Silicium kann weiterhin durch die folgenden Schritte erhalten werden:

Gewinnung von Siliciumtetrachlorid (SiCl₄) durch
a. Umsetzen von SiO₂ mit Chlor in Gegenwart eines Reduktionsmittels,
ab. Umsetzen von Silicium mit Chlor oder Chlorverbindungen, oder
ac. Gewinnen des SiCl₄ als Nebenprodukt der Müller-Rochow-Synthese oder der Herstellung von Chlorsilanen und
b. Reduktion des Siliciumtetrachlorides (SiCl₄) mit einem Metall in einem Lösungsmittel.

Dieses Verfahren zeichnet sich somit durch zwei Schritte aus, wobei im ersten Schritt Siliciumtetrachlorid hergestellt wird oder gewonnen wird. Im zweiten Schritt wird das Siliciumtetrachlorid mit einem Metall in einem Lösungsmittel reduziert, wodurch amorphes Silicium gewonnen wird.

Dieses Verfahren zeichnet sich durch eine besonders hohe Vielseitigkeit aus. So kann es zum Herstellen von hochreinem amorphen (schwarzen) Silicium eingesetzt werden. Es kann jedoch ebenfalls zur Herstellung von braunem belegten amorphen Silicium, d.h. amorphem Silicium geringerer Reinheit, eingesetzt werden. Eine weitere Einsatzmöglichkeit des Verfahrens besteht darin, daß es zur Änderung der Belegung des belegten amorphen Siliciums verwendet werden kann. Mit anderen Worten, aus belegtem amorphen Silicium, das beispielsweise mit O oberflächenbelegt ist, wird belegtes amorphes Silicium hergestellt, das beispielsweise mit Cl belegt ist. Noch eine andere Variante des Verfahrens zeichnet sich dadurch aus, daß es zur Umwandlung von kristallinem in amorphes Silicium eingesetzt wird. Schließlich findet das Verfahren auch zur Aufreinigung von Silicium Verwendung. Auf die vorstehend beschriebenen Ausführungsformen dieses Verfahrens wird später eingegangen werden.

In Schritt b. dieses Verfahrens wird das hergestellte Siliciumtetrachlorid mit einem Metall in einem Lösungsmittel reduziert. Mit dem hier verwendeten Begriff "Lösungsmittel" ist ein Mittel gemeint, das in der Lage ist, eine Dispersion des Metalles im "Lösungsmittel" herzustellen, d.h. dieser Begriff soll auch bloß Dispersionsmittel umfassen. Ein apolares oder unpolares "Lösungsmittel" weist im Gegensatz zu einem "polaren" Lösungsmittel keine polare Gruppen oder funktionelle Gruppen auf, deren charakteristische Elektronenverteilungen dem Molekül ein beträchtliches elektrisches Dipolmoment erteilen, so daß solche Gruppen die Affinität zu anderen polaren chemischen Verbindungen bedingen.

Bei einer Ausführungsform dieses Verfahrens findet in Schritt b. ein polares Lösungsmittel Verwendung. Das hierdurch gewonnene amorphe Silicium fällt als braunes Pulver an und ist, wie Untersuchungen gezeigt haben, "oberflächenbelegt", beispielsweise mit Cl, Silylchlorid oder O₁ oder HO. Durch die Verwendung eines polaren Lösungsmittels wird zwangsläufig eine Oberflächenbelegung des gewonnenen amorphen Siliciums erreicht, das aufgrund der vorhandenen Oberflächenbelegung kein reines amorphes Silicium ist. Ein solches polares Lösungsmittel ist beispielsweise Glycolether.

Bei einer besonders bevorzugten Ausführungsform dieses Verfahrens wird im Schritt b. ein apolares Lösungsmittel verwendet. Dabei wurde festgestellt, daß durch Einsatz eines derartigen apolaren Lösungsmittels reines amorphes Silicium erhalten wird, das eine schwarze Farbe besitzt. Dieses amorphe Silicium ist nicht "oberflächenbelegt" und zeichnet sich durch ein besonders hohes Reaktionsvermögen aus. Vorzugsweise finden hierbei organische, nichtkoordinierende Lösungsmittel, wie Xylol, Toluol, Verwendung.

Als Metall wird in Schritt b. vorzugsweise ein Metall der Gruppe I oder II des Periodensystems verwendet. Natrium wird bevorzugt, wobei allerdings auch mit Magnesium gute Ergebnisse erzielt wurden.

Das Metall wird vorzugsweise im Lösungsmittel aufgeschmolzen, um eine Dispersion des Metalles im Lösungsmittel herzustellen. Ein derartiges Aufschmelzen ist nicht unbedingt erforderlich, vielmehr können auch Metallstäube, Metallpulver etc. eingesetzt werden. Wesentliche ist, daß das Metall in einem Zustand mit aktivierter Oberfläche für die Reaktion zur Verfügung steht.

Wenn das Metall im Lösungsmittel aufgeschmolzen werden soll, findet vorzugsweise ein apolares Lösungsmittel Verwendung, dessen Siedepunkt höher ist als der Schmelzpunkt des verwendeten Metalles, und es wird mit einer Reaktionstemperatur über der Schmelztemperatur des Metalles (Natrium = 96°C) und unter dem Siedepunkt des eingesetzten apolaren Lösungsmittels gearbeitet. Es kann auch bei erhöhten Drücken gearbeitet werden.

Zweckmäßigerweise wird Schritt b. unter Rückflußbedingungen für das Lösungsmittel durchgeführt.

Bei diesem Verfahren fällt das unbelegte amorphe Silicium im Gemisch mit einem Metallchlorid an. Bereits dieses Gemisch besitzt in bezug auf das amorphe Silicium eine sehr hohe Reaktivität, so daß es für die gewünschten weiteren Reaktionen eingesetzt werden kann. Das amorphe Silicium kann aber auch über ein Trennverfahren aus dem Gemisch isoliert werden, wobei hierzu beliebige physikalische oder chemische Trennverfahren eingesetzt werden können. So können beispielsweise physikalische Trennverfahren, wie Aufschmelzen, Abpressen, Zentrifugieren, Sedimentationsverfahren, Flotationsverfahren etc., eingesetzt werden. Als chemisches Verfahren kann ein Auswaschen des amorphen Siliciums mit einem Lösungsmittel oder Lösungsmittelgemisch, welches das Metallchlorid löst, aber nicht irreversibel mit dem Slicium reagiert, durchgeführt werden. Beispielsweise wird mit flüssigem Ammoniak ein mit Ammoniakbelegtes Silicium gewonnen, wobei durch Abpumpen des Ammoniaks das gewünschte reine amorphe Silicium schwarzer Farbe dargestellt werden kann.

Zur Gewinnung des Siliciumtetrachlorides sieht dieses Verfahren verschiedene Alternativen vor. Bei einer ersten Alternative wird SiO₂ (Siliciumdioxid) mit Chlor (Cl₂) in Gegenwart eines Reduktionsmittels umgesetzt. Bei dem Reduktionsmittel kann es sich hierbei um Kohlenstoff handeln, wobei das Verfahren als Carbochlorierung bezeichnet wird. Ein entsprechendes Verfahren ist beispielsweise in der EP 0 167 156 A2 beschrieben. Als Reduktionsmittel können auch Metalle Verwendung finden. Bei einer Ausführungsform dieses Verfahrens wird hierbei Magnesium als Reduktionsmittel eingesetzt, wobei dieses sogenannte magnesothermische Verfahren nach der Reaktionsgleichung

SiO₂ + 2Mg - 2MgO + Si

abläuft. Mit diesem Verfahren wird kristallines Silicium erhalten. Wird MgO zugesetzt, erhält man amorphes belegtes Silicium.

Eine weitere Verfahrensvariante ist das sogenannte aluminothermische Verfahren, bei dem als Reduktionsmittel Aluminium Verwendung findet. Das Verfahren Läuft wie folgt ab:

3SiO₂ + 4Al - 3Si+Al₂O₃

Auch bei diesem Verfahren fällt kristallines Silicium an.

Das gebildete Si wird mit Chlor zum Siliciumtetrachlorid umgesetzt. Auf diese Weise kann das entstandene kristalline Silicium in amorphes Silicium (hochrein oder belegt) überführt werden, oder es kann eine Umbelegung von amorphem Silicium durchgeführt werden. Ferner kann eine Aufreinigung des gewonnenen Siliciums (amorph oder kristallin) vorgenommen werden, wenn entsprechend verunreinigtes SiO₂ als Ausgangsprodukt eingesetzt wird.

Bei einer weiteren Alternative von Schritt a. des erfindungsgemäßen Verfahrens wird Silicium mit Chlor oder Chlorverbindungen umgesetzt. Es kann sich hierbei um Silicium handeln, das gereinigt, vom kristallinen in den amorphen Zustand überführt oder umbelegt werden soll.

Noch eine Variante sieht vor, daß das Siliciumtetrachlorid als Nebenprodukt der Müller-Rochow-Synthese oder der Herstellung von Chlorsilanen gewonnen wird. Im letztgenannten Fall fällt das Siliciumtetrachlorid beispielsweise als Nebenprodukt bei der Herstellung von Trichlorsilan und der Abscheidung des polykristallinen Si an.

Bei der direkten Umsetzung von Silicium mit Chlor oder Chlorverbindungen kann mit Mikrowellenenergie gearbeitet werden. Vorzugsweise findet Chlor oder Chlorwasserstoff Verwendung. Zweckmäßigerweise wird nicht-gepulste Mikrowellenenergie eingesetzt, wobei Silicium in Verbindung mit einer Mikrowellenenergie absorbierenden und thermische Energie auf Silicium übertragenden Substanz verwendet werden kann, um die Umsetzung zu beschleunigen.

Als weiteres bevorzugtes Verfahren zur Herstellung von amorphem Silicium kann die Umsetzung von SiO₂ oder Silicaten mit Fluorwasserstoff oder einem Fluorid eines Metalles der Gruppe I oder II des Periodensystems zu SiF₄ unter Freisetzung von H₂O oder von Hexafluorosilicaten unter Wärmezufuhr zu SiF₄ und Metallfluorid und weitere Umsetzung des SiF₄ mit einem Metall der Gruppe I oder II zu Si und einem Metallfluorid verwendet werden. Auf diese Weise läßt sich braunes amorphes Silicium herstellen.

Das für die Herstellung von Si benötigte Basismaterial SiO₂ (Siliciumdioxid) kann aus auf der Erde vorhandenen SiO₂₋Quellen (insbesondere Wüstensand, Meersand) bereitgestellt werden. Dieser Sand, der weitgehend aus SiO₂ besteht, wird gemäß der ersten Alternative direkt mit Fluorwasserstoff (HF) (extern) umgesetzt, wobei SiF₄ (Siliciumtetrafluorid) durch Zusatz von Schwefelsäure zur entstehenden Hexafluorokieselsäure (H₂SiF₆) ausgetrieben wird. 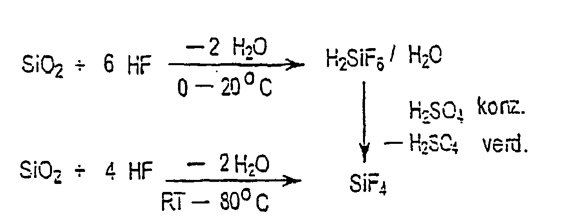 SiO₂ wird mit HF gemischt, und H₂SO₄ wird unter Rühren eingetropft. Je nach Zugabegeschwindigkeit entsteht zwischen 0°C und Raumtemperatur SiF₄. Durch eine Temperaturerhöhung auf ca. 80°C wird der SiF₄-Austrieb aus einem Vorratsgefäß vervollständigt. Das gewonnene SiF₄ fällt als farbloses Gas an, das durch Umkondensation oberhalb seines Sublimationspunktes (-95,5°C) weiter aufgereinigt werden kann. Alle die sich aus den Verunreinigungen des Sandes (SiO₂) ergebenden Alkali-, Erdalkali-, Al-Fluoride u.a. bleiben als feste Produkte der HF-Umsetzung zurück bzw. reagieren mit zugesetzter H₂SO₄ zu den Sulfaten und können als Feststoffe abgetrennt werden (können nach Aufarbeitung produktspezifischen Verwendungen zugeführt werden).

Bei der 2. Alternative wird Sand (SiO₂) mit einem Fluorid eines Metalls der Gruppe I oder II, vorzugsweise einem Alkalimetallfluorid (AF), insbesondere Natriumfluorid, gemischt, und es wird Schwefelsäure zugetropft (in situ-Verfahren). Dabei entsteht der HF in situ und reagiert mit dem SiO₂ sofort zum SiF₄ und Metallsulfat, vorzugsweise Alkalimetallsulfat, insbesondere Natriumsulfat, ab.

Was das zur Umsetzung des SiF₄ verwendete Metall betrifft, so kann dieses in fester oder flüssiger Form eingesetzt werden, oder es wird in der Gasphase gearbeitet. Eine weitere Alternative sieht vor, daß man in Lösung umsetzt.

Die nachfolgende nicht erfindungsgemäße Beispiele betreffen Verfahren zur Herstellung von amorfen silizium.

### Beispiel 1

Herstellung von amorphem Silicium aus Siliciumtetrachlorid
30,20 g (1,31 mol) Na werden unter Schutzgas in 250 ml o-Xylol aufgeschmolzen und durch heftiges Rühren mit einem Magnetrührer fein dispergiert. 45 ml (62,1 g, 0,365 mol, 1,1 Äquivalente) SiCl₄ werden unter heftigem Rühren so zugetropft, daß die Siedetemperatur der Reaktionsmischung den Schmelzpunkt des Metalles nicht unterschreitet. Um ein vollständiges Abreagieren des Natriums zu gewährleisten, wird so lange weiter unter heftigem Rühren und Rückfluß gekocht, bis die Siedetemperatur der Reaktionsmischung nicht mehr steigt. Ergebnis der Reaktion ist ein schwarzes Gemisch aus amorphem Silicium und NaCl. Ein größerer Überschuß von SiCl₄ ist für die Reaktion nicht hinderlich, sofern die Siedetemperatur der Mischung oberhalb des Schmelzpunktes von Na bleibt.

### Beispiel 2

Herstellung von amorphem Silicium aus Siliciumtetrafluorid
4,15 g (0,18 mol) Na werden in 50 ml o-Xylol unter SiF₄-Atmosphäre aufgeschmolzen und durch heftiges Rühren mit einem Magnetrührer fein dispergiert. Die Reaktionstemperatur liegt beständig über dem Schmelzpunkt des Natriums, jedoch unter dem Siedepunkt des Xylols (bevorzugt 110-120 °C). Ein Vorrat an SiF₄ befindet sich in einem an die Apparatur angeschlossenen Gasballon, mit Hilfe dessen auch der SiF₄₋Umsatz kontrolliert wird. Die Reaktion ist abgeschlossen, sobald kein SiF₄ mehr verbraucht wird. Produkt der Umsetzung ist ein schwarzes Gemisch aus amorphem Silicium und NaF.

Aus dem gemäß den obigen beiden Beispielen hergestellten Gemisch kann schwarzes amorphes Silicium über ein geeignetes Trennverfahren gewonnen werden. Das erhaltene schwarze amorphe Silicium besitzt eine höhere Reaktivität als auf herkömmliche Weise, d.h. mit einem polaren Lösungsmittel, gewonnenes Silicium.

Als Halosilan können ferner Hexafluorosilicate eingesetzt werden.

Die Reaktionstemperatur oberhalb des Metallschmelzpunktes gilt nicht für z.B. Na-Staub, welcher auch bei Raumtemperatur reagiert. Die Reaktionstemperatur unterhalb des Siedepunktes sollte nur für gasförmige Silane eingehalten werden, um einen ausreichenden Partialdruck des Silanes über der Dispersion zu gewährleisten und somit vertretbare Reaktionszeiten zu erreichen.

## Patentansprüche

1. Verfahren zur Herstellung von Organohalogensilane durch Umsetzen von amorphen Silicium mit Organohalogenen.
**dadurch gekennzeichnet, daß** als amorphes Silicium schwarzes oder braunes amorphes Silicium verwendet wird.

2. Verfahren nach Anspruch 1, **dadurch gekennzeichnet, daß** man die Umsetzung katalysatorfrei durchführt.

3. Verfahren nach Anspruch 1, **dadurch gekennzeichnet, daß** man die Umsetzung unter Verwendung eines Katalysators durchführt.

4. Verfahren nach Anspruch 3, **dadurch gekennzeichnet, daß** man die Umsetzung bei Temperaturen < 300 °C durchführt.

5. Verfahren nach einem der Ansprüche 1 bis 4, **dadurch gekennzeichnet, daß** man im Gemisch mit einem Metallhalogenid vorliegendes schwarzes amorphes Silicium mit dem Organohalogen umsetzt.

6. Verfahren nach einem der Ansprüche 1 bis 5, **dadurch gekennzeichnet, daß** man feines, insbesondere staubfeines, Siliciumpulver einsetzt.

7. Verfahren nach einem der Ansprüche 1 bis 6, **dadurch gekennzeichnet, daß** man die Umsetzung im Fließbett durchführt.

8. Verfahren nach einem der Ansprüche 1 bis 7, **dadurch gekennzeichnet, daß** man die Umsetzung des amorphen Siliciums mit dem Organohalogen mit Mikrowellenenergie bewirkt.

9. Verfahren nach Anspruch 8, **dadurch gekennzeichnet, daß** man das amorphe Silicium in Verbindung mit einer Mikrowellenenergie absorbierenden und thermische Energie auf Silicium übertragenden Substanz einsetzt.

## Claims

1. A method for producing organohalosilanes by reacting amorphous silicon with organohalogens, **characterized by** using black or brown amorphous silicon as amorphous silicon.

2. The method according to claim 1, **characterized in that** the reaction is carried out in a catalyst-free manner.

3. The method according to claim 1, **characterized in that** the reaction is carried out with the use of a catalyst.

4. The method according to claim 3, **characterized in that** the method is carried out at temperatures < 300 °C.

5. The method according to one of the claims 1 to 4, **characterized in that** black amorphous silicon present in a mixture with a metal halide is reacted with the organohalogen.

6. The method according to one of the claims 1 to 5, **characterized in that** fine, especially dust-fine, silicon powder is used.

7. The method according to one of the claims 1 to 6, **characterized in that** the reaction is carried out in a fluidized bed.

8. The method according to one of the claims 1 to 7, **characterized in that** the reaction of the amorphous silicon with the organohalogen is caused with microwave energy.

9. The method according to claim 8, **characterized in that** the amorphous silicon is used in connection with a substance absorbing microwave energy and transferring thermal energy to silicon.

## Revendications

1. Procédé de production d'organohalogénosilanes par réaction de silicium amorphe avec des organohalogènes, **caractérisé en ce que** l'on utilise en tant que silicium amorphe du silicium amorphe noir ou brun.

2. Procédé selon la revendication 1 , **caractérisé en ce que** l'on entreprend la réaction sans catalyseur.

3. Procédé selon la revendication 1, **caractérisé en ce que** l'on entreprend la réaction avec utilisation d'un catalyseur.

4. Procédé selon la revendication 3, **caractérisé en ce que** l'on entreprend la réaction à des températures de moins de 300°C.

5. Procédé selon l'une quelconque des revendications 1 à 4, **caractérisé en ce que** l'on fait réagir du silicium noir amorphe se trouvant en mélange avec un halogénure avec l'organohalogène.

6. Procédé selon l'une quelconque des revendications 1 à 5, **caractérisé en ce que** l'on met en oeuvre de la poudre de silicium finement divisée, en particulier en poudre fine.

7. Procédé selon l'une quelconque des revendications 1 à 6, **caractérisé en ce que** l'on entreprend la réaction en lit fluidisé.

8. Procédé selon l'une quelconque des revendications 1 à 7, **caractérisé en ce que** l'on effectue la réaction du silicium amorphe avec l'organohalogène au moyen d'énergie de micro-ondes.

9. Procédé selon la revendication 8, **caractérisé en ce que** l'on met en oeuvre le silicium amorphe en combinaison avec une substance absorbant l'énergie des micro-ondes et transférant de l'énergie thermique au silicium.
